# EUROPÄISCHE PATENTSCHRIFT

(11) **EP 3 017 904 B1**
(45) Veröffentlichungstag und Bekanntmachung des Hinweises auf die Patenterteilung: **22.02.2017**
(21) Anmeldenummer: 14192081.9
(22) Anmeldetag: 06.11.2014
(51) Int. Cl.: B23K 20/16, B23K 23/00, F24J 1/00, B23K 35/02

(54) **Vorrichtung und Verfahren zum Verbinden von metallischen Werkstücken**
Method and device for connecting metal workpieces
Dispositif et procédé destinés à relier des pièces métalliques

(43) Veröffentlichungstag der Anmeldung: 11.05.2016
(73) Patentinhaber: Kairos Industrial AG, 8807 Freienbach (CH)
(72) Erfinder: Gambarotta, Riccardo, 8004 Zürich (CH); Gambarotta, Alessandro, 8004 Zürich (CH)
(74) Vertreter: Strässle, Simon

(56) Entgegenhaltungen:
- US-A- 2 468 372
- US-A- 2 745 368
- US-A- 3 308 532
- US-A- 5 902 498

## Beschreibung

### TECHNISCHES GEBIET

Die vorliegende Erfindung betrifft ein Schweissband gemäss dem Oberbegriff des Anspruches 1, siehe zum Beispiel US5902498 und ein Verfahren zum Verbinden von metallischen Werkstücken mittels dieses Schweissbandes.

### STAND DER TECHNIK

Im Maschinenbau ist es bekannt, metallische Werkstücke durch Schmelzschweissen miteinander zu verbinden. Die dafür verwendeten Verfahren sind beispielsweise das Gasschmelzschweissen, das Lichtbogenhandschweissen, das Schutzgasschweissen, das Wolfram-Inertgasschweissen, das Unterpulverschweissen, das Laserschweissen, das Elektronenstahlschweissen, das Aluminothermische Schweissen.

Alle diese Verfahren haben einen grossen Platzbedarf, da sie Hilfsaggregate zur Durchführung benötigen. Diese Verfahren sind bestenfalls mobil, sie sind jedoch kaum oder nicht tragbar. Hilfsaggregate sind beispielsweise Gasbehälter, Transformatoren, Leistungskabel, welche die Mobilität der Schweissanlage einschränken. Der grosse Platzbedarf bedingt, dass solche Anlagen in einer Überdachten Halle mit kontrollierte Temperatur und Luftfeuchtigkeit eingesetzt werden. Ebenfalls bedingen diese Verfahren eine lange Ausbildungszeit und ein grosses Fachwissen. Das laienhafte Ausführen dieser Verfahren ist gefährlich für den Ausführenden und die von Laien hergestellten Verbindungen von minderer Qualität.

Auch bekannt aus dem Stand der Technik ist das Aluminothermische Schweissen, welches vor allem beim Verschweissen von Bahnschienen angewendet wird. Dabei werden die zu verbindenden Schienen in einem gewissen Abstand voneinander aufeinander ausgerichtet und eine Mischung aus Eisenoxidpulver und Aluminiumpulver wird in einem Tiegel über der Schweissstelle angeordnet. Nach der Zündung, bei einer Temperatur von etwa 2'450 Grad Celsius verflüssigt sich das Eisen und fliesst in den Spalt zwischen den beiden Schienen.

Dieses Verfahren ist für komplexere Schweissungen ungeeignet, da ein Tiegel über der zu verbindenden Stelle angeordnet werden muss. Auch ist die Handhabung vom pulverförmigen Schweissmittel in feuchter oder nasser Umgebung ungeeignet.

Beim Verbinden von Kunststoffen ist es bekannt, Kunststoffteile miteinander zu verbinden, in dem über der zu verbindenden Stelle Heizpackungen anzubringen. Die US 3,663,335 zeigt eine solche Heizpackung, wobei ein brennbares Material mit einer Isolationsschicht umgeben ist, um eine langsam ansteigende, einen bestimmten Wert nicht übersteigende Temperatur von etwa 100 Grad Celsius zu erreichen und diese über einen längeren Zeitraum zu halten.

Die US 2,961,363 zeigt das Verbinden von Kunststoffrohren mittels eines Ringes, welcher mit einer selbstbrennenden exothermen Substanz befüllt ist. Dabei wird der Ring direkt zwischen den zu verbindenden Teilen angeordnet und gezündet.

### DARSTELLUNG DER ERFINDUNG

Ausgehend vom Stand der Technik ist es daher eine Aufgabe der Erfindung, die obengenannten Nachteile zu vermeiden und eine Vorrichtung bereitzustellen, mit welcher einfach und zuverlässig Metallteile miteinander verbunden werden können und ein Verfahren unter der Verwendung dieser Vorrichtung bereitzustellen, welches unbedenklich von Laien durchgeführt werden können und gute Schweissresultate erzielen.

Diese Aufgaben werden durch ein Schweissband mit den Merkmalen des Anspruchs 1 und einem Verfahren mit den Merkmalen des Anspruchs 9 gelöst.

In einer bevorzugten Ausführungsform eines erfindungsgemässen Schweissbandes zum thermischen Verbinden von metallischen Werkstücken durch Schmelzen sind die Abmessungen des Schweissbandes in einer Längsrichtung ein Vielfaches der Abmessungen in einer zur Längsrichtung senkrechten Querrichtung. Das Schweissband weist in einem Querschnitt senkrecht zur Längsrichtung eine nach aussen abschliessende Deckschicht auf, welche eine innere Deckschicht und eine äussere Deckschicht umfasst. Die innere Deckschicht ist ausgestaltet, um in einer bestimmungsgemässen Gebrauchslage den unmittelbar zu verbindenden Teilen der Werkstücke zugewandt zu sein, und die äussere Deckschicht ist ausgestaltet, um den unmittelbar zu verbindenden Teilen der Werkstücke abgewandt zu sein. In der Querrichtung sind zumindest in seitlichen Randbereichen der inneren Deckschicht Haftschichten vorhanden, mit welchen das Schweissband auf den zu verbindenden Werkstücken befestigbar ist. Im Innern der Deckschicht ist eine selbstbrennende exotherme Substanz vorhanden, welche bei Zündung die zur Schweissung benötigte thermische Energie zur Verfügung stellt.

Bevorzugt ist ausschliesslich zwischen der exothermen Substanz und der äusseren Deckschicht ein nichtbrennbarer Hitzeschild angeordnet, welcher der Abbrandtemperatur der exothermen Substanz standhält, und welcher dem Entweichen von Wärme zur Aussenseite hin entgegenwirkt. Zwischen der exothermen Substanz und der inneren Deckschicht ist ein Schweisszusatz vorgesehen, welcher beim Abbrennen der exothermen Substanz aufschmelzen und sich mit den zu verbindenden Werkstücken verbinden kann.

Die exotherme Substanz ist massgeblich für die erzeugbare Wärme verantwortlich. Eine mögliche exotherme Substanz ist Thermit, welches bei 2'450 Grad Celsius verbrennt. Alternativ können pyrotechnische Mischungen auf der Basis von Aluminium, Bor, Barium, Chromat, Aluminium-Oxyd oder ähnlichem verwendet werden. Grundsätzlich können alle Materialkombinationen verwendet werden, welche eine exotherme Redoxreaktion erzeugen können. Durch Zusätze wie beispielsweise Fluoride kann die Abbrandtemperatur beeinflusst werden. Vorteilhaft ist ein gleichmässiges Abbrennen bei einer Temperatur, welche etwa 50% höher ist, als die Schmelztemperatur des Materials der zu verbindenden Werkstücke. Bevorzugt sollte das Abbrennen möglichst ohne Rauchentwicklung geschehen.

Ebenfalls lässt sich die auf die zu verbindende Stelle wirkende Temperatur durch die Ausgestaltung des Hitzeschildes beeinflussen. Üblicherweise werden Keramikfasern für den Aufbau des Hitzeschildes verwendet. Durch den Aufbau und die Dicke lässt sich die oben-erwähnte Temperatur beeinflussen.

Vorzugsweise sind die exotherme Substanz und der Schweisszusatz bandförmig ausgebildet. Dies erleichtert die Anordnung im Schweissband und stellt eine über die Breite gleichmässige Verteilung sicher. Es ist ebenfalls gewährleistet, dass genügend Schweisszusatz vorhanden ist, um die Verbindung zu realisieren. Beispielsweise kann auf dem Schweissband eine Markierung vorgesehen sein, welche angibt für welche Art der Schweissung das Band geeignet ist. Beispielsweise für eine Verbindung zweier Stahlbleche von 3 bis 5 Millimeter Dicke. Bänder mit anderen Markierungen zum Verschweissen von Werkstücken aus anderen Materialien und mit anderen Dicken sind ebenfalls machbar. Eine Farbcodierung für die unterschiedlichen Materialien, beispielsweise Blau für Stahl und Rot für Kupfer sind ebenfalls denkbar. Alternativ oder zusätzlich kann die Brenntemperatur auf dem Bandäusseren vermerkt sein.

Der interne Aufbau eines Schweissbandes kann ebenfalls einer Kennzeichnung zugeordnet sein. Beispielsweise kann ein Rechteck einen rechteckigen Querschnitt des Schweisszusatzes symbolisieren und ein Dreieck, ein Trapez, ein Halbkreis oder eine Halbellipse einen dementsprechenden Querschnitt. Die Breite des Schweisszusatzes und der exothermen Substanz bestimmen die Breite der erzeugbaren Schweissnaht. Im Unterschied zu den herkömmlichen Schweissverfahren lassen sich sehr breite Schweissnähte auf einmal herstellen, beispielsweise im Bereich von 1 bis 20 Millimeter.

In einer bevorzugten Ausführungsform ist ein Zündmittel in der unmittelbaren Nähe der exothermen Substanz angeordnet, um ein vollständiges Abbrennen der exothermen Substanz sicherzustellen.

Eine weitere Ausführungsform weist zwischen dem Schweisszusatz und dem Zündgemisch eine keramische Trennschicht auf. Diese hat den Vorteil, dass sich das Zündgemisch nicht mit dem Schweisszusatz vermischen kann und so die Schweissnaht verunreinigt. Ausserdem führt sie zu einer gewissen Temperaturreduktion, was bei Materialien vorteilhaft ist, welche einen niedrigeren Schmelzpunkt aufweisen.

Bevorzugt ist die exotherme Substanz mehrteilig und das Zündmittel ist zwischen zwei benachbarten Teilen der exothermen Substanz angeordnet. Dies stellt sicher, dass die exothermen Substanzen in jedem Fall zuverlässig abbrennen. Ebenfalls ermöglicht dies das Entfernen gewisser Abschnitte des Schweissbandes, ohne das Zündmittel, beispielsweise eine Zündschnur zu beschädigen. Dies ist beispielsweise vorteilhaft beim Schweissen von Eckbereichen. Da das Band aufgrund seiner Eigensteifigkeit nicht bis ganz in eine Ecke gedrückt werden kann, kann es so geschnitten und platziert werden, dass sich die geschnittene Stelle genau in der Ecke befindet.

Um ein Abtrennen einzelner Bereiche des Bandes zu vereinfachen, können Schwachstellen im Band ausgebildet sein. Für eine unterbrochene Schweissnaht, kann das Band zuerst über die gesamte Länge der zu schweissenden Stelle angeordnet werden und anschliessend können einzelne Bereiche, zwischen zwei Schwachstellen entfernt werden, ohne dabei die Zündschnur zu unterbrechen.

In einer vorteilhaften Ausführungsform ist die innere Deckschicht einstückig mit der äusseren Deckschicht ausgebildet, verklebt oder verschweisst. Je nach der Herstellungsart sind gewisse Ausbildungen der Deckschicht vorteilhaft. Für die Herstellung von Schweissbändern mit Längen von bis zu 10 Metern können Schläuche als Deckschicht von Vorteil sein. Der Inhalt des Bandes, d.h. die Isolationsschicht, der Schweisszusatz, die exotherme Substanz und die Zündschnur können dann in den Deckschicht-Schlauch eingezogen werden.

Bei einer Endlosproduktion bietet sich das Verkleben oder Schweissen an, da die untere Deckschicht als Ablage verwendet werden kann, auf welcher der Bandinhalt wie oben beschrieben abgelegt wird. Anschliessend wird der so entstandene Stapel durch die obere Deckschicht abgeschlossen und die beiden Deckschichten miteinander verklebt oder verschweisst.

Vorzugsweise ist die äussere Deckschicht vollständig durch eine Druckschicht abgedeckt ist, sodass eine Druckkammer entsteht, welche zumindest durch die äussere Deckschicht und die Druckschicht begrenzt ist. Die Druckkammer ermöglicht das Aufbringen eines Überdrucks in der Druckkammer, wodurch eine Kraft von oben auf die zu verschweissende Stelle Drückt. Der geschmolzene Schweisszusatz fliesst somit nicht nur durch die Schwerkraft bedingt in den zu verbindenden Bereich, sondern wird aktiv durch den Überdruck in den Bereich gepresst. Dies ermöglicht das Schweissen nicht nur in geneigten Bereichen, sondern gar das Schweissen über Kopf.

Vorteilhaft ist die Druckschicht mit der äusseren Deckschicht oder mit den Haftschichten verklebt oder verschweisst. Dies stellt einen einfachen Aufbau dar. Die Haftschichten können beispielsweise doppelseitig klebend ausgebildet sein. Mit einem Teil einer ersten Seite wird die Klebschicht mit einem Randbereich der unteren Deckschicht verbunden und mit einem anderen Teil der ersten Seite wird die Klebschicht mit einem Randbereich der Druckschicht verbunden. Vor dem Gebrauch ist eine zweite Seite der Klebschicht mit einer Trennschicht abgedeckt, was ein ungewolltes Kleben vor dem bestimmungsgemässen Gebrauch verhindert.

Das Innere der Deckschicht ist vorzugsweise sauerstoff- oder stickstofffrei oder mit einem Inertgas gefüllt. Damit wird vermieden, dass sich im Bereich der Schweissnaht Sauerstoff oder Stickstoff befindet. Ebenfalls wird dadurch verhindert, dass beispielsweise der Schweisszusatz bei längerer Lagerung oxidiert.

Bei einem bevorzugten Verfahren zum thermischen Verbinden von metallischen Werkstücken durch Schmelzen, wobei die zu verbindenden Werkstücke stumpf, winklig oder überlappend angeordnet werden, wird ein erfindungsgemässes Schweissband über den zu verbindenden Bereichen der Werkstücke angeordnet.

Vorzugsweise wird die Schweissung durch das Anzünden des Zündmittels ausgelöst. Dies verhindert eine ungewollte Selbstzündung, da erst ein Zünder mit dem Zündmittel in Kontakt zu bringen ist.

Bevorzugt wird das Zündmittel durch eine offene Flamme oder durch einen elektrischen Zünder angezündet. Dies sind einfache Arten der Zündung und können überall und gefahrenfrei durch Laien ausgeführt werden.

In einem vorzugsweisen Verfahren wird vor der Auslösung der Schweissung in der Druckkammer ein Überdruck erzeugt. Dies bewirkt, dass der Schweisszusatz gegen den zu verbindenden Bereich gepresst wird und ein Fliessen des Schweisszusatzes in den Schweissbereich sicherstellt.

Vorzugsweise wird das zu verwendende Schweissband aufgrund seines Schweisszusatzes ausgewählt. Für das Verschweissen von Stahl, wird beispielsweise ein Schweisszusatz auf der Basis von Stahl verwendet und für Kupfer einer auf der Basis von Kupfer.

In einem vorzugsweisen Verfahren wird das Schweissband zum Schweissen unter Wasser verwendet. Durch den vorteilhaften Aufbau einer dicht verschlossenen Deckschicht ist es möglich, das Schweissband auch unter Wasser einzusetzen. Beim Einsatz unter Wasser ist es wichtig, dass die freien Enden des Schweissbandes wasserdicht verschlossen sind. Ist das Zündgemisch in separaten Behältnissen gehalten, beispielsweise in Kunststoffschläuchen, so bleibt es selbst dann trocken, wenn Feuchtigkeit in das Schweissband eindringt, zumindest über einen gewissen Zeitraum.

In einem weiteren Verfahren wird das Schweissband zum Schweissen über Kopf verwendet. Durch die Druckkammer über der Deckschicht kann eine Anpresskraft auf den Schweisszusatz ausgeübt werden, wodurch der Einfluss der Schwerkraft zumindest teilweise kompensiert werden kann und der geschmolzene Schweisszusatz auch beispielsweise von unten nach oben zu der zu verbindenden Stelle gedrückt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen Querschnitt durch eine erste Ausführungsform eines erfindungsgemässen Schweissbandes in einer ersten Anwendung;
- Fig. 2: eine Detailansicht der Figur 1 mit einem eingesetzten Zünder;
- Fig. 3: ein Querschnitt durch das Schweissband der Figur 1 in einer weiteren Anwendung;
- Fig. 4: einen Querschnitt durch eine zweite Ausführungsform eines erfindungsgemässen Schweissbandes in der Anwendung von Figur 1;
- Fig. 5: eine perspektivische Ansicht eines erfindungsgemässen Schweissbandes in einem teilweise aufgerollten Zustand;
- Fig. 6: eine perspektivische Ansicht eines erfindungsgemässen Schweissbandes in der Anwendung von Figur 1;
- Fig. 7: eine perspektivische Teilschnittansicht eines erfindungsgemässen Schweissbandes in einer weiteren Anwendung; und
- Fig. 8: eine perspektivische Ansicht erfindungsgemässer Schweissbänder in einer weiteren Anwendung.

### BESCHREIBUNG BEVORZUGTER AUSFÜHRUNGSFORMEN

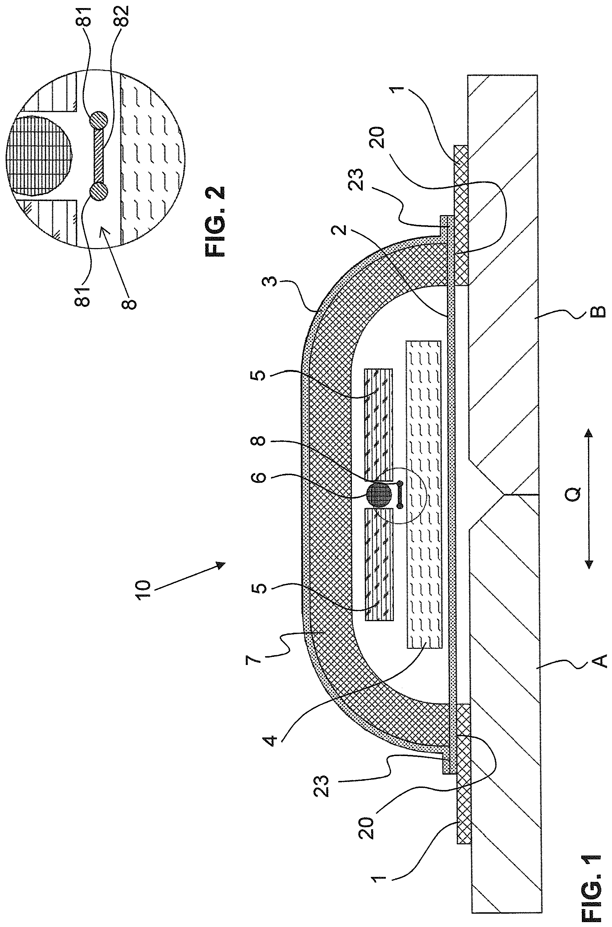

Figur 1 zeigt einen Querschnitt durch eine erste Ausführungsform eines erfindungsgemässen Schweissbandes 10 in einer ersten Anwendung, wobei die beiden Werkstücke A, B stumpf miteinander verbunden werden sollen. Hierfür können die entsprechenden Stossstellen der beiden zu verbindenden Werkstücke A, B in der herkömmlichen Art und Weise vorbereitet werden. Dargestellt ist eine Anfasung der zu verbindenden Oberkanten. Die unmittelbare Umgebung der Verbindungsstelle ist von Schmutz und Öl zu befreien. Die zu verbindenden Werkstücke A, B sind aufeinander auszurichten und zu fixieren.

Über der Verbindungsstelle ist ein erfindungsgemässes Schweissband 10 angeordnet. Das Schweissband 10 weist im Querschnitt eine geschlossene dichtende Deckschicht 2, 3 auf. Dargestellt ist eine Deckschicht mit einem zweiteiligen Aufbau, welcher eine innere Deckschicht 2 und eine äussere Deckschicht 3 umfasst, wobei die innere Deckschicht 2 der Verbindungsstelle zugewandt und die äussere Deckschicht 3 der Verbindungstelle abgewandt ist. Die beiden Deckschichten sind in der Querrichtung Q in seitlichen Randbereichen 23 gängigen Verbindungen miteinander verbunden, beispielsweise mit einer Kleb- oder Schweissverbindung. Die beiden Deckschichten 2, 3 sind Kunststofffolien, beispielsweise aus Polyethylen, welche mit Adhäsiven, beispielsweise auf Acrylbasis miteinander verbunden sind. Alternativ kann die Deckschicht 2, 3 einstückig ausgebildet sein. Die Deckschicht ist dann ein Kunststoffschlauch aus den obengenannten Materialien.

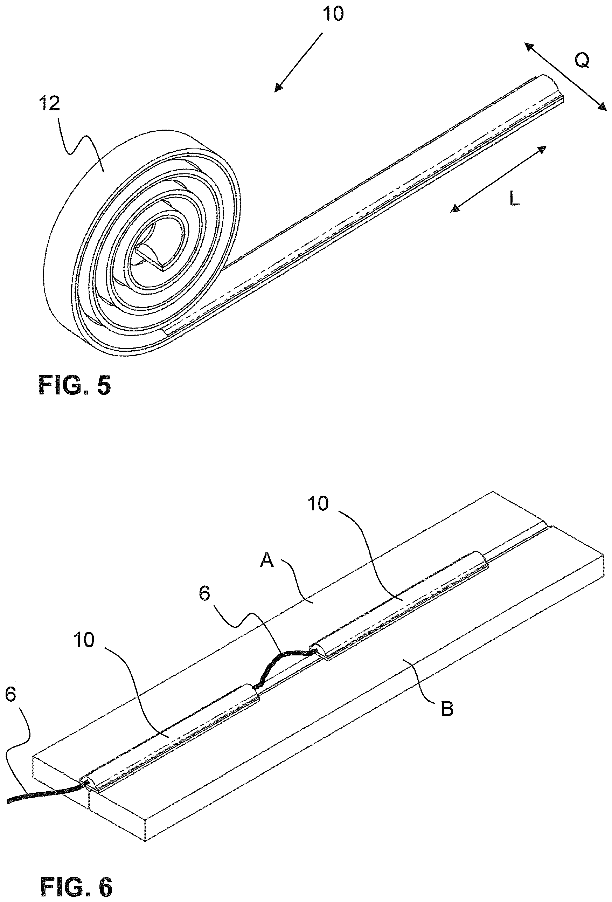

Die Deckschicht 2, 3 ist mit Haftschichten 1 an den zu verbindenden Werkstücken A, B angeordnet. Die Haftschichten sind in einer Aufbewahrungsform, d.h. vor dem bestimmungsgemässen Gebrauch durch eine Trennschicht 12 abgedeckt, wie dies in der Figur 5 dargestellt ist. Die Haftschichten 1 sind in seitlichen Randbereichen 20 der inneren Deckschicht 2 angeordnet, wobei jede der Haftschichten zur Hälfte an der inneren Deckschicht befestigt ist und zur Hälfte seitlich über diese vorsteht. Die Haftschichten können derart ausgebildet sein, dass sie nicht über die Deckschicht ragen oder in einem anderen Verhältnis, beispielsweise 1/3 zu 2/3 oder 2/3 zu 1/3.

Im Innern der Deckschicht 2, 3, ausschliesslich auf der Aussenseite, d.h. anschliessend an die äussere Deckschicht 3 ist ein Hitzeschild 7 vorgesehen. Der Hitzeschild 7 ist zumindest teilweise mit der Deckschicht verbunden, beispielsweise durch eine haftende oder klebende Verbindung. Alternativ ist der Hitzeschild 7 in das Innere eingelegt, d.h. nicht mit der Deckschicht verbunden, sondern nur an diese anliegend. Der Hitzeschild umfasst beispielsweise Keramik- oder Glasfasern. Durch den Hitzeschild 7 wird verhindert, dass Wärme vom Innern der Deckschicht nach aussen, d.h. in Richtung der äusseren Deckschicht aus dem Schweissband 10 entweicht. Vorteilhaft wird der Wärmefluss nach aussen wieder zurück ins Innere, d.h. in Richtung der inneren Deckschicht, bzw. in Richtung der zu verbindenden Werkstücke reflektiert.

Im Innern der Deckschicht 2, 3, ausschliesslich auf der Innenseite, d.h. anschliessend an die innere Deckschicht 2 ist ein Schweisszusatz 4 vorgesehen. Der Schweisszusatz 4 ist zumindest teilweise mit der Deckschicht verbunden, beispielsweise durch eine haftende oder klebende Verbindung. Alternativ ist der Schweisszusatz 4 in das Innere eingelegt, d.h. nicht mit der Deckschicht verbunden, sondern nur an diese anliegend. Dargestellt ist ein bandförmiger Schweisszusatz, der im Querschnitt eine grössere Abmessung in der Querrichtung als in der Dicke aufweist. Der Schweisszusatz weist über die Breite, d.h. in der Querrichtung eine konstante Dicke auf. Alternativ kann die Dicke in der Mitte grösser als an den seitlichen Enden sein. In diesem Fall hätte es mehr Schweisszusatz-Material im Bereich der Schweissung, d.h. es stünde mehr Material über der Schweissnaht zur Verfügung. Der Querschnitt des Schweisszusatzes wäre dann dreiecks- oder trapezförmig. Halbellipsenförmige Querschnitte oder anders dickenverteilte Querschnitte sind auch denkbar.

Alternativ und nicht dargestellt, kann der Schweisszusatz über die Breite segmentiert sein, da dies die Flexibilität des Schweissbandes in der Querrichtung erhöht.

Der Schweisszusatz weist vorteilhafter Weise ein ähnliches oder gleiches Material wie die zu verbindenden Werkstücke A, B auf. Metallische Schweisszusätze enthalten beispielsweise Stahl, Kupfer, Zinn, Messing oder deren Legierungen.

Zwischen dem Schweisszusatz 4 und dem Hitzeschild 7 ist eine selbstbrennende exotherme Substanz 5, das sogenannte Zündgemisch, beispielsweise Thermit vorgesehen. Alternativ können pyrotechnische Mischungen auf der Basis von Aluminium, Bor, Barium, Chromat, Aluminium-Oxyd oder ähnlichem verwendet werden. Allgemein können alle Zündgemische verwendet werden, welche selbstbrennend und exotherm sind.

Durch die Menge und Zusammensetzung des Zündgemisches kann die gesamthaft freigesetzte Wärmemenge festgelegt werden.

Das Zündgemisch ist bandförmig ausgebildet und weist eine grössere Abmessung in der Querrichtung als in der Dicke auf. Da das Zündgemisch meist granulat- oder pulverförmig ist, wird es mit einem Bindemittel vermengt oder in ein Behältnis abgefüllt. Beispielsweise kann es in Schläuche aus Kunststofffolie abgefüllt werden. Dargestellt sind zwei Zündgemischbänder, welche symmetrisch bezüglich der Querschnittsmittelachse angeordnet sind und zwischen welchen eine Zündschnur 6 vorgesehen ist. Es können alternativ mehrere mit Zündgemisch befüllte Schläuche nebeneinander angeordnet werden.

Das Zündgemisch 5 kann je nach den zu verbindenden Werkstücken A, B eine unterschiedliche Zusammensetzung aufweise, wodurch sich die Abbrenngeschwindigkeit oder -Temperatur einstellen lässt. Es ist auch denkbar, dass sich die Zusammensetzung des Zündgemisches über die Breite, in Querrichtung ändert, so dass beispielsweise die erzeugbare Temperatur in der Mitte des Schweissbandes 10 grösser ist als in den Randbereichen.

Die Zündschnur 6 ist zentrisch zwischen den beiden Zündgemischstreifen 5 angeordnet. Sie kann jedoch auch zwischen dem Zündgemisch 5 und dem Hitzeschild 7 angeordnet werden. Die Zündschnur erstreckt sich über die gesamte Länge des Schweissbandes 10 und stellt sicher, dass das Zündgemisch zuverlässig abbrennt.

Ein Zünder 8 ist zentrisch zwischen dem Schweisszusatz 4 und dem Zündgemisch 5 dargestellt. Der Zünder 8 wird jedoch erst vor dem Auslösen der Schweissung an einem freien Ende des Schweissbandes 10 in das Innere des Schweissbandes 10 eingeführt. Wie in der Figur 2 dargestellt, weist ein solcher Zünder 8 elektrische Leiters 81 und einen Widerstand 82 auf. Beim dargestellten Zünder handelt es sich um einen elektrischen Zünder. Alternativ kann die Zündschnur 6 mit einer offenen Flamme oder anderen Zündmitteln, welche die benötigte Zündtemperatur erreichen, realisiert werden.

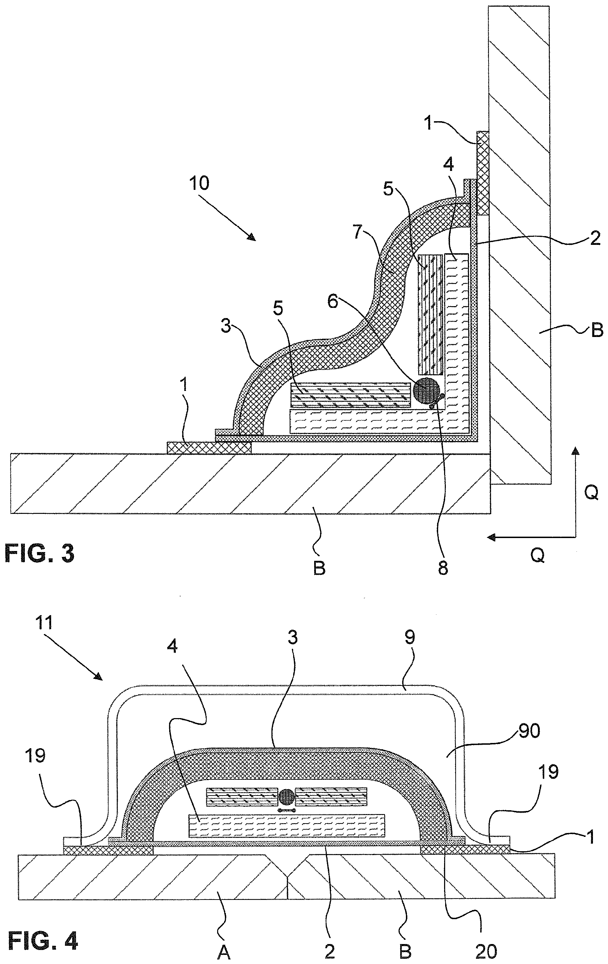

Die Figur 3 zeigt einen Querschnitt durch eine erste Ausführungsform eines erfindungsgemässen Schweissbandes 10 in einer weiteren Anwendung, wobei die beiden Werkstücke A, B winklig miteinander verbunden werden sollen.

Wie dargestellt, lässt sich der Querschnitt des Schweissbandes 10 verformen, wodurch es möglich wird, das Schweissband nah an die zu schweissende Stelle heranzubringen. Dargestellt ist ein auf der Innenseite eines Winkels angeordnetes Schweissband. Das Schweissband kann jedoch auf der Aussenseite eines Winkels angeordnet werden.

Die Figur 4 zeigt einen Querschnitt durch eine zweite Ausführungsform eines erfindungsgemässen Schweissbandes in der Anwendung von Figur 1. Das Schweissband 11 weist zusätzlich eine Druckschicht 9 auf, welche die obere Deckschicht 3 vollständig abdeckt. Die Druckschicht 9 ist derart ausgebildet, dass zwischen der oberen Deckschicht 3 und der Druckschicht 9 eine Druckkammer entsteht, welche mit einem Überdruck beaufschlagbar ist. Die Druckschicht 9 ist seitlich mit den über die Deckschicht 3 hinausragenden Teilen 19 der Haftschichten 1 verbunden. Alternativ kann die Druckschicht 9 auch mit der Deckschicht 3 verbunden sein.

Durch das Erzeugen eines Überdrucks in der Druckkammer 90 wird die Deckschicht 3 zusammen mit deren Inhalt nach innen, gegen die zu verbindenden Werkstücke A, B gedrückt. Dies ist besonders vorteilhaft, wenn zum Beispiel über Kopf geschweisst werden soll. Beim über Kopf Schweissen neigt das Schweissband schwerkraftbedingt dazu, nach unten durchzuhängen. Durch den Überdrück in der Druckkammer 90 kann dem entgegengewirkt und der Schweisszusatz 4 kann gegen die zu schweissende Stelle gedrückt werden.

Für das Erzeugen des Überdrucks müssen die freien Enden der Druckkammer 90 dicht verschlossen werden. Dies kann durch Klebband oder durch eigens dafür vorgesehene Endstücke, beispielsweise in der Form von Klemmhülsen erreicht werden. Solche Endstücke können Anschlüsse für eine Druckleitung aufweisen, wobei diese Anschlüsse vorzugsweise ein Ventil aufweisen, damit die Druckleitung vor dem Schweissbeginn entfernt werden kann. Alternativ können Anschlüsse von oben, d.h. von der der unteren Deckschicht 2 gegenüberliegenden Seite, an der Druckschicht 9 angeordnet werden.

Die Figur 5 zeigt eine perspektivische Ansicht eines erfindungsgemässen Schweissbandes in einem teilweise aufgerollten Zustand, was der Aufbewahrungsform, d.h. der Form vor dem bestimmungsgemässen Gebrauch entspricht. Das Band kann wie dargestellt gerollt oder in Streifen von vorgestimmten Längen abgelängt werden. Mehrere solcher Rollen können zu einem Zylinder zusammengefasst werden. Alternativ kann ein erfindungsgemässes Schweissband auf eine Trommel aufgewickelt werden.

Die Figur 6 zeigt eine perspektivische Ansicht eines erfindungsgemässen Schweissbandes in der Anwendung von Figur 1, jedoch mit unterbrochenem Schweissband 10. Die dargestellte Situation kann unterschiedlich erreicht werden. Es können einzelne Streifen geschnitten werden und hintereinander auf die zu schweissende Stelle aufgebracht werden. Die einzelnen Streifen können anschliessend mit Zündschnüren 6 miteinander verbunden werden. Alternativ kann ein Stück aus einem Schweissband herausgelöst werden, ohne dabei die Zündschnur 6 zu zerstören. Hierfür können im Schweissband, d.h. in den einzelnen Schichten der Schweissbandes Schwachstellen vorgesehen werden. Das Schweissband lässt sich dann an diesen Schwachstellen leicht trennen.

Die freien Enden des Schweissbandes 10 lassen sich mit Klebband oder mit dafür vorgesehenen Klemmhülsen dicht verschliessen. Optional kann in die Klemmhülse ein Zünder mit einem Anschlusskabel integriert sein. Das dichte Verschliessen ist vor allem beim Schweissen in feuchter oder nasser Umgebung, speziell beim Schweissen unter Wasser nötig.

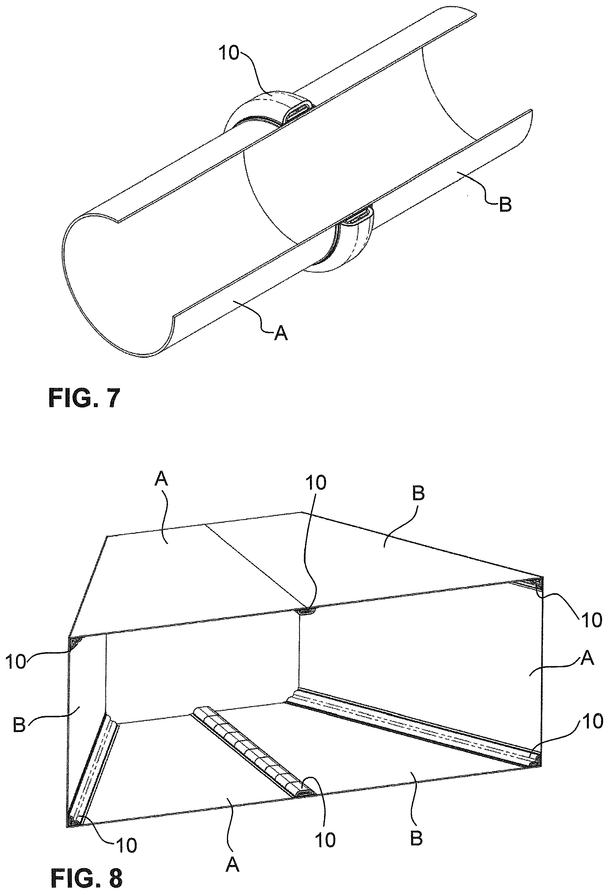

Die Figur 7 zeigt eine perspektivische Teilschnittansicht eines erfindungsgemässen Schweissbandes in einer weiteren Anwendung, wobei zwei Rohrstücke miteinander verbunden werden sollen. Das Schweissband wird von aussen am gesamten Umfang über der zu verbindenden Stelle angeordnet. Alternativ kann das Schweissband auch auf der Innenseite angeordnet werden.

Die Figur 8 zeigt eine perspektivische Ansicht erfindungsgemässer Schweissbänder in einer weiteren Anwendung, wobei Blechteile A, B miteinander zu einer über den Umfang geschlossene Struktur verbunden werden sollen. Dargestellt sind die in den Figuren 1 und 3 dargestellten Anwendungsbeispiele in einer konkreten Anwendung. Die Schweissbänder sind im Innern der Struktur über die gesamte Länge über den Verbindungsstellen angeordnet. Alternativ können sie, wie in der Figur 6 dargestellt nur über einen Teil der Länge angeordnet sein, um Unterbrochene Schweissungen zu erzielen. Wie in den vorgängig beschriebenen Anwendungen, können die Schweissbänder auch auf der Aussenseite angeordnet werden.

Vor dem Anbringen der Schweissbänder müssen die einzelnen Blechteile aufeinander ausgerichtet und fixiert werden. Es ist auch möglich, die Fixierung nur oder zu einem grossen Teil durch das Schweissband zu erzielen.

**BEZUGSZEICHENLISTE**

| | | | |
|---|---|---|---|
| 1 | Klebeband | 6 | Zündschnur |
| 10 | Schweissband | 7 | Hitzeschild |
| 11 | Schweissband | 8 | Zünder |
| 12 | Trennschicht | 81 | Leiter |
| 19 | Überstand | 82 | Widerstand |
| 2 | untere Deckschicht | 9 | Druckschicht |
| 20 | Randbereich | 90 | Druckkammer |
| 23 | Randbereich | A | erstes Werkstück |
| 3 | obere Deckschicht | B | zweites Werkstück |
| 4 | Schweisszusatz | Q | Querrichtung |
| 5 | Zündgemisch | L | Längsrichtung |

## Patentansprüche

1. Schweissband (10, 11) zum thermischen Verbinden von metallischen Werkstücken (A, B) durch Schmelzen, wobei die Abmessungen des Schweissbandes (10, 11) in einer Längsrichtung (L) ein Vielfaches der Abmessungen in einer zur Längsrichtung (L) senkrechten Querrichtung (Q) sind, **dadurch gekennzeichnet, dass** das Schweissband (10, 11) in einem Querschnitt senkrecht zur Längsrichtung (L) eine nach aussen abschliessende Deckschicht (2, 3) aufweist, welche eine innere Deckschicht (2) und eine äussere Deckschicht (3) umfasst, wobei die innere Deckschicht (2) ausgestaltet ist, um in einer bestimmungsgemässen Gebrauchslage den unmittelbar zu verbindenden Teilen der Werkstücke (A, B) zugewandt zu sein, und die äussere Deckschicht (3) ausgestaltet ist, um den unmittelbar zu verbindenden Teilen der Werkstücke (A, B) abgewandt zu sein, wobei in der Querrichtung (Q) zumindest in seitlichen Randbereichen (20) der inneren Deckschicht (2) Haftschichten (1) vorhanden sind, mit welchen das Schweissband (10, 11) auf den zu verbindenden Werkstücken (A, B) befestigbar ist, wobei im Innern der Deckschicht (2, 3) eine selbstbrennende exotherme Substanz (5) vorhanden ist, welche bei Zündung die zur Schweissung benötigte thermische Energie zur Verfügung stellt, wobei ausschliesslich zwischen der exothermen Substanz (5) und der äusseren Deckschicht (3) ein nichtbrennbarer Hitzeschild (7) angeordnet ist, welcher der Abbrandtemperatur der exothermen Substanz (5) standhält, und welcher dem Entweichen von Wärme zur Aussenseite hin entgegenwirkt, und dass zwischen der exothermen Substanz (5) und der inneren Deckschicht (2) ein Schweisszusatz (4) vorgesehen ist, welcher beim Abbrennen der exothermen Substanz (5) aufschmelzen und sich mit den zu verbindenden Werkstücken (A, B) verbinden kann.

2. Schweissband (10, 11) gemäss Anspruch 1, wobei die exotherme Substanz (5) und der Schweisszusatz (4) bandförmig ausgebildet sind.

3. Schweissband (10, 11) gemäss Anspruch 1 oder 2, wobei ein Zündmittel (6) in der unmittelbaren Nähe der exothermen Substanz (5) angeordnet ist, um ein vollständiges Abbrennen der exothermen Substanz (5) sicherzustellen.

4. Schweissband (10, 11) gemäss Anspruch 3, wobei die exotherme Substanz (5) mehrteilig ist und das Zündmittel (6) zwischen zwei benachbarten Teilen der exothermen Substanz (5) angeordnet ist.

5. Schweissband (10, 11) gemäss einem der Ansprüche 1 bis 4, wobei die innere Deckschicht (2) mit der äusseren Deckschicht (3) einstückig ausgebildet, verklebt oder verschweisst ist.

6. Schweissband (10, 11) gemäss einem der Ansprüche 1 bis 5, wobei die äussere Deckschicht (3) vollständig durch eine Druckschicht (9) abgedeckt ist, sodass eine Druckkammer (90) entsteht, welche zumindest durch die äussere Deckschicht (3) und die Druckschicht (9) begrenzt ist.

7. Schweissband (10, 11) gemäss Anspruch 6, wobei die Druckschicht (9) mit der äusseren Deckschicht (3) oder mit den Haftschichten (1) verklebt oder verschweisst ist.

8. Schweissband (10, 11) gemäss einem der Ansprüche 1 bis 7, wobei das Innere der Deckschicht (2, 3) sauerstoff- oder stickstofffrei oder mit einem Inertgas gefüllt ist.

9. Schweissband (10, 11) gemäss einem der Ansprüche 1 bis 8, wobei zwischen der exothermen Substanz (5) und dem Schweisszusatz (4) eine keramische Trennschicht vorgesehen ist.

10. Schweissband (10, 11) gemäss einem der Ansprüche 1 bis 9, wobei in der Deckschicht (2, 3), der exothermen Substanz (5), dem Schweisszusatz (4) und gegebenenfalls der Druckschicht (9) und/oder der Trennschicht Schwachstellen vorgesehen sind, an welchen das Schweissband (10, 11) leicht trennbar ist.

11. Verfahren zum thermischen Verbinden von metallischen Werkstücken (A, B) durch Schmelzen unter der Verwendung eines Schweissbandes (10, 11) gemäss einem der vorherigen Ansprüche, wobei die zu verbindenden Werkstücke (A, B) und das Schweissband (10, 11) vor der Auslösung der Schweissung derart zueinander angeordnet werden, dass die zu verbindenden Werkstücke (A, B) durch die Schweissung miteinander verbunden werden.

12. Verfahren gemäss Anspruch 11, wobei vor der Auslösung der Schweissung in der Druckkammer (90) ein Überdruck erzeugt wird.

13. Verfahren gemäss Anspruch 11 oder 12, wobei das zu verwendende Schweissband (10, 11) aufgrund seines Schweisszusatzes (4) ausgewählt wird.

14. Verfahren gemäss einem der Ansprüche 11 bis 13, wobei das Schweissband (10, 11) zum Schweissen unter Wasser verwendet wird.

15. Verfahren gemäss einem der Ansprüche 11 bis 14, wobei das Schweissband (10, 11) zum Schweissen über Kopf verwendet wird.

## Claims

1. A welding tape (10, 11) for thermal connection of metallic workpieces (A, B) by melting, wherein the dimensions of the welding tape (10, 11) in a longitudinal direction (L) are a multiple of the dimensions in a transverse direction (Q) perpendicular to the longitudinal direction (L), **characterized in that** the welding tape (10, 11) comprises in a cross section perpendicular to the longitudinal direction (L) an outwardly terminating cover layer (2, 3), which has an inner cover layer (2) and an outer cover layer (3), wherein the inner cover layer (2) is arranged so as to face the immediately to be joined parts of the workpieces (A, B) in an intended position of use, and the outer cover layer (3) is arranged so as to face away from the immediately to be joined parts of the workpieces (A, B), wherein in the transverse direction (Q) at least in lateral edge regions (20) of the inner layer (2) adhesive layers (1) are present, with which the welding tape (10, 11) is attachable on the workpieces to be joined (A , B), wherein a self-burning exothermic substance (5) is provided inside of the cover layer (2, 3), which provides at ignition for the time required for welding the necessary thermal energy, wherein a non-combustible heat shield (7) is exclusively arranged between the exothermic substance (5) and the outer cover layer (3), which can withstand the combustion temperature of the exothermic substance (5) and which counteracts the escape of heat to the outer side, and wherein a welding additive (4) is provided between the exothermic substance (5) and the inner cover layer (2) and which will melt during the burning of the exothermic substance (5) and which can be connected to the workpieces to be joined (A, B).

2. The welding tape (10, 11) according to claim 1, wherein the exothermic substance (5) and the welding additive (4) are constructed in strip form.

3. The welding tape (10, 11) according to claim 1 or 2, wherein an ignition means (6) is arranged in the immediate vicinity of the exothermic substance (5) to ensure complete combustion of the exothermic substance (5).

4. The welding tape (10, 11) according to claim 3, wherein the exothermic substance (5) is multi-part and the ignition means (6) is arranged between two adjacent parts of the exothermic substance (5).

5. The welding tape (10, 11) according to any one of claims 1 to 4, wherein the inner cover layer (2) is formed in one piece with, glued to or welded to the outer cover layer (3).

6. The welding tape (10, 11) according to any one of claims 1 to 5, wherein the outer cover layer (3) is completely covered through a pressure layer (9), so that a pressure chamber (90) is formed, which is limited at least by the outer cover layer (3) and the pressure layer (9).

7. The welding tape (10, 11) according to claim 6, wherein the pressure layer (9) is adhesively bonded or welded with the outer cover layer (3) or the adhesive layers (1).

8. The welding tape (10, 11) according to any one of claims 1 to 7, wherein the interior of the cover layer (2, 3) is oxygen-free or is nitrogen-free or is filled with an inert gas.

9. The welding tape (10, 11) according to any one of claims 1 to 8, wherein a ceramic separation layer is provided between the exothermic substance (5) and the welding additive (4).

10. The welding tape (10, 11) according to any one of claims 1 to 9, wherein vulnerabilities are provided in the cover layer (2, 3), within the exothermic substance (5), in the welding additive (4) and optionally within the pressure layer (9) and / or within the release layer, to easily separate to the welding tape (10, 11) at these vulnerabilities.

11. A process for the thermal joining of metal work pieces (A, B) by melting with the use of a welding tape (10, 11) according to any one of the preceding claims, wherein the workpieces to be joined (A, B) and the welding tape (10, 11) are arranged one to another before the triggering of the weld such that the workpieces to be joined (A, B) are joined together by the weld.

12. The process according to claim 11, wherein prior to the initiation of welding in the pressure chamber (90) an excess pressure is generated.

13. The process according to claim 11 or 12, wherein the welding tape (10, 11) is selected due to its welding filler metal (4).

14. The process according to any one of claims 11 to 13, wherein said welding tape (10, 11) is used for welding under water.

15. The process according to any one of claims 11 to 14, wherein said welding tape (10, 11) is used for welding over head.

## Revendications

1. Bande de soudure (10, 11) pour le raccordement thermique de pièces métalliques (A, B) par fusion, où les dimensions de la bande de soudure (10, 11) dans une direction longitudinale (L) est un multiple des dimensions dans la direction longitudinale (L) perpendiculaire à la direction transversale (Q), **caractérisé en ce que** la bande de soudure (10, 11) comprend dans une section transversale perpendiculaire à la direction longitudinale (L) une couche de recouvrement se terminant vers l'extérieur (2, 3) qui comporte une couche de recouvrement intérieure (2) et une couche de recouvrement extérieure (3), où la couche de recouvrement intérieure (2) est agencé de manière à faire face, dans une position d'utilisation prévue, aux parties des pièces (A, B) à assembler dans la suite, où et la couche de recouvrement extérieure (3) est agencé de manière à être détournée des parties des pièces (A , B) à assembler dans la suite, où des couches adhésives (1) sont présents dans la direction transversale (Q) au moins dans les régions de bord latérales (20) de la couche de recouvrement intérieure (2), avec lesquels couches la bande de soudure (10, 11) est fixé sur les pièces (A , B) à assembler, où à l'intérieur des couches de recouvrement (2, 3) est prévu une substance auto-combustible exothermique (5), laquelle rend disponible, lors de l'allumage, l'énergie thermique nécessaire pour le soudage, où un écran thermique non combustible (7) est exclusivement disposé entre la substance exothermique (5) et la couche de recouvrement extérieure (3), qui peut résister à la température de combustion de la substance exothermique (5), et qui s'oppose à la fuite de chaleur vers le côté extérieur, et où entre la substance exothermique (5) et la couche de recouvrement intérieure (2) est prévu un additif de soudage (4), qui, lors de la combustion de la substance exothermique (5), peut fondre et relier les pièces (A, B) à assembler.

2. Bande de soudure (10, 11) selon la revendication 1, où la substance exothermique (5) et l'additif de soudage (4) sont réalisés sous forme d'une bande.

3. Bande de soudure (10, 11) selon la revendication 1 ou 2, où un moyen d'allumage (6) est disposé à proximité immédiate de la substance exothermique (5), afin d'assurer une combustion complète de la substance exothermique (5).

4. Bande de soudure (10, 11) selon la revendication 3, où la substance exothermique (5) est prévue en plusieurs parties et le moyen d'allumage (6) est disposé entre deux parties adjacentes de la substance exothermique (5).

5. Bande de soudure (10, 11) selon l'une quelconque des revendications 1 à 4, où la couche de recouvrement intérieure (2) forme une seule pièce avec la couche de recouvrement extérieure (3) ou ils sont collées ou soudées ensemble.

6. Bande de soudure (10, 11) selon l'une quelconque des revendications 1 à 5, où la couche de recouvrement extérieure (3) est recouverte complètement par une couche de pression (9), de telle sorte qu'une chambre hyperbare (90) est formée, laquelle est limitée au moins par la couche de recouvrement extérieure (3) et ladite couche de pression (9).

7. Bande de soudure (10, 11) selon la revendication 6, où la couche de pression (9) est collée ou soudée avec la couche de recouvrement extérieure (3) ou avec les couches adhésives (1).

8. Bande de soudure (10, 11) selon l'une quelconque des revendications 1 à 7, où l'intérieur de la couche de recouvrement (2, 3) est exempt d'oxygène ou est exempt d'azote ou est rempli d'un gaz inerte.

9. Bande de soudure (10, 11) selon l'une quelconque des revendications 1 à 8, où une couche de séparation en céramique est prévue entre la substance exothermique (5) et l'additif de soudage (4).

10. Bande de soudure (10, 11) selon l'une quelconque des revendications 1 à 9, dans laquelle sont prévues des emplacements de fragilisation dans la couche de recouvrement extérieure (2, 3), dans la substance exothermique (5), dans l'additif de soudage (4) et éventuellement dans la couche de pression (9) et / ou dans la couche séparateur, où la bande de soudure (10, 11) est facilement séparable.

11. Procédé pour joindre thermiquement des pièces en métal (A, B) par fusion à l'aide d'une bande de soudage (10, 11) selon l'une quelconque des revendications précédentes, où les pièces (A, B) à assembler et la bande de soudure (10, 11) sont disposés avant le déclenchement de la soudure les unes par rapport à l'autre de telle sorte que les pièces (A, B) à assembler sont reliées entre elles par la soudure.

12. Procédé selon la revendication 11, dans lequel une surpression est générée avant le début du soudage dans la chambre de pression (90).

13. Procédé selon la revendication 11 ou 12, dans lequel la bande de soudure (10, 11) à utiliser est sélectionnée en raison de sa charge de soudure métallique (4).

14. Procédé selon l'une quelconque des revendications 11 à 13, dans lequel ladite bande de soudure (10, 11) est utilisée pour un soudage sous l'eau.

15. Procédé selon l'une quelconque des revendications 11 à 14, dans lequel ladite bande de soudure (10, 11) est utilisée pour un soudage au-dessus de la tête.
